# EUROPÄISCHE PATENTSCHRIFT

(11) **EP 0 949 342 B1**
(45) Veröffentlichungstag und Bekanntmachung des Hinweises auf die Patenterteilung: **04.06.2003**
(21) Anmeldenummer: 99106427.0
(22) Anmeldetag: 29.03.1999
(51) Int. Cl.: C22C 1/05, C22C 1/08, F16C 33/04, F16C 33/06, F16C 33/14, C22C 32/00, B22F 3/11

(54) **Gleitlager**
slide bearings
palier de glissement

(30) Priorität: 07.04.1998 DE 19815648
(43) Veröffentlichungstag der Anmeldung: 13.10.1999
(73) Patentinhaber: Maxon-Motor GmbH, 79350 Sexau (DE)
(72) Erfinder: Fütterer, Bodo, 6005 Luzern (CH)
(74) Vertreter: Grünecker, Kinkeldey, Stockmair & Schwanhäusser Anwaltssozietät

(56) Entgegenhaltungen:
- EP-A- 0 620 286
- EP-A- 0 703 382
- DE-A- 3 822 919
- US-A- 4 775 596
- PATENT ABSTRACTS OF JAPAN vol. 097, no. 011, 28. November 1997 (1997-11-28) -& JP 09 184037 A (FUJI CORP:KK;SUMITOMO LIGHT METAL IND LTD), 15. Juli 1997 (1997-07-15)
- YIH P ET AL: "Titanium diboride copper-matrix composites" JOURNAL OF MATERIALS SCIENCE, 1 APRIL 1997, CHAPMAN & HALL, UK, Bd. 32, Nr. 7, Seiten 1703-1709, XP002110609 ISSN: 0022-2461
- PATENT ABSTRACTS OF JAPAN vol. 098, no. 002, 30. Januar 1998 (1998-01-30) -& JP 09 260556 A (NHK SPRING CO LTD), 3. Oktober 1997 (1997-10-03)

## Beschreibung

Die Erfindung bezieht sich auf eine Gleitlager-Wellenkombination mit einem Gleitlager aus einem Sintergemisch und einer Keramikwelle, wobei das Sintergemisch aus zumindest einem metallischen Sinterwerkstoff und aus mindestens einem keramischen Sinterwerkstoff gebildet ist.

In Yip. et al. "Titanium-Diboride Copper-Matrix Composites", J.Mat.Sc., 1997, **32**(7), ist ein Verbundwerkstoff mit Titan-Diborid beschrieben.

In der EP 0 620 286 A1 ist ein Verbundwerkstoff mit eingelagerten, festen Schmiermittelpartikeln beschrieben.

In der JP 09184 037 und in der EP 0 703 382 A1 sind Verbundwerkstoffe mit hohen Reibungskoeffizienten für Bauteile wie Kupplungsscheiben und Bremsscheiben beschrieben.

In der DE 38 22 919 C2 ist ein Gleitlager für Elektrokleinstmotoren mit einem Porenanteil von 10% bis 30% beschrieben. Diese Poren sind zur Schmierstoffversorgung des Lagers mit Öl getränkt. Das Gleitlager ist aus einem Verbundwerkstoff, der aus Metallpartikeln und Siliciumnitridpartikeln besteht, gefertigt. Die Korngröße des Siliciumnitrid-Sinterpulvers beträgt dabei 250 µm.

Die Siliciumnitridpartikel geben dem Lager eine ausreichende Härte gegen Reibungsverschleiß. Die Metallpartikel erhöhen die Zähigkeit des Verbundwerkstoffes und führen zu einer erhöhten mechanischen Belastbarkeit des Gleitlagers.

Die gattungsgemäßen Lager sind im instationären Betrieb, also im Betrieb mit häufigen Anfahr- und Abbremsvorgängen, sowie für den Einsatz bei niedrigen Wellendrehzahlen und gleichzeitigen hohen Querkräffen ungeeignet. Im Dauerbetrieb unter diesen Bedingungen ist die Lebensdauer dieser Lager sehr gering, da nach einer gewissen Laufzeit das im Lager enthaltene Schmiermittel crackt, also seine molekulare langkettige , Struktur aufbricht, und es so seine Schmierfähigkeit verliert. Als Folge tritt ein starker Lagerverschleiß auf.

Kennzeichnend für den Betrieb bei niedrigen Drehzahlen und hoher Querkraft ist das zumindest zeitweise Zusammenbrechen des Schmierfilms, der bei Gleitlagem durch die Drehbewegung der Welle im Lagerspalt zwischen Gleitlager und Welle aufgeschwemmt wird und die Welle ohne Berührung mit der Gleitlagerschale trägt.

Aus deutscher Patentanmeldung 197 38 919.8 ist ein Gleitlager bekannt, das für den Betrieb bei niedrigen Drehzahlen und gleichzeitigen hohen Radialleisten ausgelegt ist. Dieses Gleitlager verzichtet völlig auf die Beimengung von Keramikpulvem, verwendet aber als Ausgleich einen härtbaren metallischen Werkstoff, der im Anschluß an das Sintem gehärtet wird.

Dieses Gleiflager hat den entscheidenden Nachteil, daß das Härten einen zusätzlichen Fertigungsschritt darstellt, der die Herstellungskosten erhöht. Zudem werden durch das Härten Eigenspannungen im Gleitlager erzeugt, die die Maßhaltigkeit des Lagers reduzieren. Diese Maßhaltigkeit des Gleitlagers ist aber ein entscheidender Parameter, der die Lebensdauer des Gleitlagers beeinflußt, da die exakte Größe des Spaltes zwischen Gleitlager und Welle den Tragvorgang des Lagers bestimmt.

Der vorliegenden Erfindung liegt daher die Aufgabe zugrunde, eine Gleitlager-Wellen-kombination zu schaffen, die bei geringen Herstellungskosten und einer geringst möglichen Anzahl von Verfahrenschritten eine lange Lebensdauer im Betrieb mit niedrigen Wellenfrehzahlen und gleichzeitiger hoher Querkraft aufweist.

Diese Aufgabe wird mit der Gleitlager-Wellenkombination nach Anspruch 1 gelöst.

Zwar ist aus der US-A-5,938,864 ein Verbundwerkstoff bekannt, der ein Keramikmaterial aufweist, welches eine Wärmeleitfähigkeit von mindestens 50W/ (m K) aufweist In dieser Entgegenhaltung ist jedoch weder auf die Bedeutung der Wärmeleitfähigkeit hingewiesen, noch beschäftigt sich die Entgegenhaltung mit Gleitlagem für Keramikwellen.

Die erfindungsgemäße Lösung ist einfach und hat überraschenderweise zur Folge, daß im Dauerbetrieb mit niedrigen Wellendrehzahlen und hoher Querlast, sowie im instationären Betrieb das Schmiermittel nicht mehr crackt und am Lager kein meßbarer Ver-Verschleiß mehr auftritt.

Als Vorteil dieser Erfindung ergibt sich daher unmittelbar eine hohe Lebensdauer des Gleitlagers bei gleichzeitig reduzierten Fertigungskosten gegenüber bekannten, gehärteten Metall-Gleitlagern.

Versuche führten zu dem für den Erfinder überraschenden Ergebnis, daß die Lebensdauer der Gleitlager bei Mischreibung, d.h. ohne tragenden Ölfilm im Lager, auf 2000 h gegenüber 80 h für bisherige aus dem Stand der Technik bekannte Lager stieg. Dies scheint auf die stark verbesserte Wärmeleitfähigkeit des keramischen Werkstoffes zurückführbar zu sein, die lokale Wärmespitzen durch schnelles Ableiten der Wärme vor dem Cracken des Schmierstoffes verhindert.

Die Härte des keramischen Werkstoffes scheint beim Verschleiß des Gleitlagers gegenüber der Wärmeleitfähigkeit eine geringere Rolle zu spielen als bisher in der Gleitlagertechnik angenommen wurde.

Zweckmäßigerweise kommen die Gleitlager bei Elektrokleinstmotoren zum Einsatz.

In einer besonders vorteilhaften Ausgestaltung kann der keramische Sinterwerkstoff mit dem metallischen Sinterwerkstoff im Volumenverhältnis 1:25 bis 1:3 gemischt werden. Üblicherweise ist der keramische Sinterwerkstoff spröde, wohingegen der metallische Sinterwerkstoff eine gewisse Duktilität aufweist. Um daher bei eventueller schlagartiger Belastung des Lagers Sprödbruch zu vermeiden, sollte der Anteil des metallischen Sinterwerkstoffs in den angegebenen Grenzen liegen. Diese Mischungsvernältnisse haben sich als vorteilhaft erwiesen, da so der metallische Sinterwerkstoff schlagartige Belastungen elastisch auffangen kann, ohne daß die Härte des Sinterlagers geringer wird.

In einer weiteren vorteilhaften Ausgestaltung kann das Gleitlager ein offenes Porenvolumen von 10% bis 30% aufweisen. Dieser Bereich hat sich bewährt, da hier eine gute Aufnahmefähigkeit des Gleitlagers für das Schmiermittel mit einer guten Festigkeit kombiniert ist.

Vorteilhaft ist es weiterhin, wenn die Wärmeleitfähigkeit des keramischen Sinterwerkstoffes mindestens 70 W/(m K), vorzugsweise 100 W/(m K), beträgt. Es hat sich herausgestellt, daß mit steigender Wärmeleitfähigkeit des keramischen Sinterwerkstoffes die Lebensdauer des Gleitlagers gerade im Betriebsbereich bei niedriger Drehzahl und gleichzeitiger hoher Radiallast steigt.

Dabei wird die Wärmeleitfähigkeit des Stoffes an dichten Körpern gemessen. Bei anisotroper Wärmeleitfähigkeit, d.h. in verschiedenen Richtungen des Materials unterschiedlicher Wärmeleitfähigkeit, wie sie beispielsweise bei Bomitrid auftritt, wird die Wärmeleitfähigkeit in der Richtung gemessen, in der sie ihren größten Wert annimmt. Bei Bornitrid ist dies beispielsweise senkrecht zur Preßrichtung.

Der keramische Werkstoff kann in weiteren Ausgestaltungen aus Aluminiumnitrid, Titandiborid, Bomitrid und/oder Berylliumoxid bestehen. Des weiteren sind als keramische Werkstoffe siliciumgefiltertes, heißgepreßtes oder heißisostatisch gepreßtes Siliciumcarbid verwendbar. Alle diese Werkstoffe haben sich in Versuchen als sehr vorteilhaft gegenüber anderen Materialien herausgestellt, indem sie die Lebensdauer und Belastbarkeit des Gleitlagers bei niedrigen Wellendrehzahlen erhöhen.

Um eine optimale Kombination von Härte, die aus dem keramischen Sinterwerkstoff herrührt, und Duktilität, die aus dem metallischen Sinterwerkstoff herrührt, im Lager zu erhalten, kann ein Mischungsverhältnis zwischen dem keramischen Sinterwerkstoff und dem metallischen Sinterwerkstoff 1:25 bis 1:3 betragen. Diese Werte haben sich in Versuchen als vorteilhaft erwiesen.

Im folgenden wird die Erfindung anhand eines Beispieles näher erläutert.

Zur Herstellung des beispielhaft beschriebenen Lagers wird beispielsweise Pulver aus einer härtbaren Bronze mit einer mittleren Korngröße von 50-60 µm mit Kügelchen aus Bornitrid einer Komgröße von 3 µm im Verhältnis 3 Volumenanteile Bronze zu einem Volumenanteil Bomitrid gemischt. Hierbei ist auf eine homogene Verteilung des Bornitridpulvers in der Pulvermischung zu achten.

Anschließend wird das Gemisch in eine dem herzustellenden Lager entsprechende Form gefüllt und verpreßt. Nach dem Herausnehmen des Preßlings aus der Form wird dieser gesintert. Dieser Sintervorgang läuft im wesentlichen so ab, wie bei herkömmlichen Sinterlagern.

Um das gewünschte Passungsmaß für die Wellen-Lager-Kombination zu erhalten, wird dann die Lagerbohrung des Lagers kalibriert. Dieser Vorgang ist bei herkömmlichen Sinterlagern üblich. Hierbei wird durch die Lagerbohrung ein entsprechender kalibrierter Dom gezogen.

Anschließend wird das Lager mit Öl getränkt. Dadurch reichert sich das Öl im offenen Porenraum des gesinterten Lagers ab. Hierfür besitzt das Lager zweckmäßigerweise ein offenes Mindestporenvolumen von 15%.

Nun ist das Lager einsatzbereit.

Aus dem Vorangegangenen wird deutlich, daß die Herstellung des Gleitlagers sehr einfach ist. Zudem erfolgt sie im wesentlichen mit den gleichen Mitteln wie bei herkömmlichen Sinterlagern.

Wie die herkömmlichen Sinterlager weist ein solches Lager den Vorteil auf, daß auf der Innenoberfläche der Lagerbohrung harte Tragpartikel aus Keramik bzw. Oxidmetall vorhanden ist, die zusammen mit der eingesetzten Keramikwelle für einen sehr geringen Reibungskoeffizienten sorgen. Über diesen aus dem Stand der Technik bekannten Vorteil weist das Lager verbesserte Notlaufeigenschaften auf. Ein Grund dafür scheint die hohe Wärmeleitfähigkeit des keramischen Werkstoffes zu sein, dank der auf der Tragfläche entstehende, lokale Wärmespitzen schnell wegdiffundiert werden.

## Patentansprüche

1. Gleitlager-Wellen-Kombination, bestehend aus einem Gleitlager aus einem Sintergemisch und einer Keramikwelle, wobei das Sintergemisch aus zumindest einem metallischen Sinterwerkstoff und aus mindestens einem keramischen Sinterwerkstoff gebildet ist, wobei die Wärmeleitfähigkeit des keramischen Sinterwerkstoffes mindestens 50 W/(m K) beträgt.

2. Gleitlager-Wellen-Kombination nach Anspruch 1, **dadurch gekennzeichnet, daß** die Wärmeleitfähigkeit des keramischen Sinterwerkstoffes mindestens 70W/(m K), vorzugsweise 100W/(m K), beträgt

3. Gleitlager -Wellen-Kombination nach einem der Ansprüche 1 oder 2, **dadurch gekennzeichnet, daß** der keramische Werkstoff aus Aluminiumnitrid besteht.

4. Gleitlager -Wellen-Kombination nach einem der Ansprüche 1 bis 3, **dadurch gekennzeichnet. daß** der keramische Werkstoff aus Titan-Diborid besteht.

5. Gleitlager -Wellen-Kombination nach einem der Ansprüche 1 bis 4, **dadurch gekennzeichnet, daß** der keramische Werkstoff aus Bomitrid besteht.

6. Gleitlager -Wellen-Kombination nach einem der Ansprüche 1 bis 5, **dadurch gekennzeichnet, daß** der keramische Werkstoff aus siliciumgefiftertem Siliciumcarbid besteht.

7. Gleitlager-Wellen-Kombination nach einem der Ansprüche 1 bis 6, **dadurch gekennzeichnet, daß** der keramische Werkstoff aus heißgepreßtem Siliciumcarid besteht.

8. Gleitlager-Wellen-Kombination nach einem der Ansprüche 1 bis 7, **dadurch gekennzeichnet, daß** der keramische Werkstoff aus heißisostatisch gepreßtem Siliciumcarbid besteht.

9. Gleitlager-Wellen-Kombination nach einem der Ansprüche 1 bis 8, **dadurch gekennzeichnet, daß** der keramische Werkstoff aus Berylliumoxid besteht.

## Claims

1. A slide-bearing/shaft combination consisting of a slide bearing of a sintered mixture and of a ceramic shaft, wherein the sintered mixture is formed from at least one metallic sintered material and from at least one ceramic sintered material, wherein the thermal conductivity of said ceramic sintered material is at least 50 W/(m K).

2. A slide-bearing/shaft combination according to claim 1, **characterized in that** the thermal conductivity of said ceramic sintered material is at least 70 W/(m K), preferably 100 W/(m K).

3. A slide-bearing/shaft combination according to any one of claims 1 or 2, **characterized in that** said ceramic material consists of aluminum nitride.

4. A slide-bearing/shaft combination according to any one of claims 1 to 3, **characterized in that** said ceramic material consists of titanium diboride.

5. A slide-bearing/shaft combination according to any one of claims 1 to 4, **characterized in that** said ceramic material consists of boron nitride.

6. A slide-bearing/shaft combination according to any one of claims 1 to 5, **characterized in that** said ceramic material consists of silicon-filtered silicon carbide.

7. A slide-bearing/shaft combination according to any one of claims 1 to 6, **characterized in that** said ceramic material consists of hot-pressed silicon carbide.

8. A slide-bearing/shaft combination according to any one of claims 1 to 7, **characterized in that** said ceramic material consists of hot-isostatically pressed silicon carbide.

9. A slide-bearing/shaft combination according to any one of claims 1 to 8, **characterized in that** said ceramic material consists of beryllium oxide.

## Revendications

1. Combinaison palier lisse-arbre formée d'un palier lisse en mélange fritté et d'un arbre en céramique, le mélange fritté étant formé à partir d'au moins une matière métallique frittée et d'au moins une matière céramique frittée, la conductivité thermique de la matière céramique frittée étant d'au moins 50 W/(mK).

2. Combinaison palier lisse-arbre selon la revendication 1, **caractérisée en ce que** la conductivité thermique de la matière céramique frittée est d'au moins 70 W/ (mK) , de préférence de 100 W/ (mK) .

3. Combinaison palier lisse-arbre- selon la revendication 1 ou 2, **caractérisée en ce que** la matière céramique se compose de nitrure d'aluminium.

4. Combinaison palier lisse-arbre selon l'une des revendications 1 à 3, **caractérisée en ce que** la matière céramique se compose de diborure de titane.

5. Combinaison palier lisse-arbre selon l'une des revendications 1 à 4, **caractérisée en ce que** la matière céramique se compose de nitrure de bore.

6. Combinaison palier lisse-arbre selon l'une des revendications 1 à 5, **caractérisée en ce que** la matière céramique se compose de carbure de silicium dont le silicium a été éliminé par filtration.

7. Combinaison palier lisse-arbre selon l'une des revendications 1 à 6, **caractérisée en ce que** la matière céramique se compose de carbure de silicium comprimé à chaud.

8. Combinaison palier lisse-arbre selon l'une des revendications 1 à 7, **caractérisée en ce que** la matière céramique se compose de carbure de silicium traité par compression isostatique à température élevée.

9. Combinaison palier lisse-arbre selon l'une des revendications 1 à 8, **caractérisée en ce que** la matière céramique se compose d'oxyde de béryllium.
